# EUROPÄISCHE PATENTSCHRIFT

(11) **EP 1 763 465 B1**
(45) Veröffentlichungstag und Bekanntmachung des Hinweises auf die Patenterteilung: **22.11.2017**
(21) Anmeldenummer: 05747181.5
(22) Anmeldetag: 22.04.2005
(51) Int. Cl.: B60T 13/74, B60T 17/22

(54) **VERFAHREN ZUM STEUERN EINER ELEKTRONISCHEN PARKBREMSE**
METHOD FOR CONTROLLING AN ELECTRONIC PARKING BRAKE
PROCEDE DE COMMANDE D'UN FREIN DE STATIONNEMENT ELECTRONIQUE

(30) Priorität: 07.07.2004 DE 102004032898
(43) Veröffentlichungstag der Anmeldung: 21.03.2007
(73) Patentinhaber: Continental Automotive GmbH, 30165 Hannover (DE)
(72) Erfinder: GOSS, Stefan, 93164 Brunn (DE); KALBECK, Alexander, 93133 Burglengenfeld (DE); SAUER, Armin, 97450 Arnstein (DE)
(86) Internationale Anmeldenummer: PCT/EP2005/051793
(87) Internationale Veröffentlichungsnummer: WO 2006/003036

(56) Entgegenhaltungen:
- US-B1- 6 213 259
- US-B1- 6 249 737

## Beschreibung

Die Erfindung betrifft ein Verfahren zum Steuern einer elektronischen Parkbremse, bei dem bei einem Anziehen der Parkbremse eine Kraftsteuerung stattfindet.

Die Erfindung betrifft weiterhin eine elektronische Parkbremse, die im Rahmen einer Kraftsteuerung anziehbar ist.

Elektronische Feststellbremsanlagen, auch unter den Bezeichnungen elektronische, elektrische oder automatische Parkbremse bekannt, ersetzen zunehmend die rein mechanischen Handbremsen in Kraftfahrzeugen. Mit der Verwendung elektronischer Feststellbremsanlagen entfällt der meist relativ große im Fahrgastraum befindliche Bedienhebel, wodurch sich eine wesentlich größere Gestaltungsfreiheit des Fahrgastraums ergibt. Des Weiteren bietet eine derartige Anlage einen größeren Bedienkomfort, da einerseits der Bediener keine großen Kräfte aufwenden muss, um die Bremse festzustellen oder zu lösen, zum anderen können verschiedene Funktionen, wie etwa das Anfahren am Berg oder das Lösen der Bremse beim erstmaligen Anfahren nach dem Parken elektronisch und damit auch automatisch ausgeführt werden. Diese vorteilhaften Merkmale einer elektronischen Feststellbremsanlage müssen allerdings mit einer im Hinblick auf die rein mechanische Handbremse vergleichbaren oder verbesserten Sicherheit einhergehen.

Bei der Steuerung oder gegebenenfalls Regelung (hier wie auch im gesamten Dokument kann bzw. muss der Begriff Steuerung auch als Regelung verstanden werden) einer derartigen Parkbremse beispielsweise durch eine Elektromotor-GetriebeEinheit entsteht in der Regel eine Diskrepanz zwischen der Position des Getriebes und der an den Bremsen anliegenden Kraft. Dies ist auf die physikalischen Eigenschaften des Bremssystems und der Kraftübertragungsvorrichtung zurückzuführen und äußert sich unter anderem in Hystereseffekten. In diesem Zusammenhang soll der Begriff Kraftübertragungsvorrichtung sowohl den Aktuator, alle Teile, die Kräfte auf die Bremsen übertragen als auch Bestandteile, an denen die Kraft des Aktuators wirkt, umfassen. Da so eine eindeutige Zuordnung zwischen der Getriebeposition und der Bremskraft nur schlecht realisierbar ist, erfolgt eine Steuerung in der Regel nicht alleine über die Getriebe- oder Motorposition. Alternativ kann eine Steuerung der elektronischen Feststellbremsanlage über eine Kraftmessung an der Kraftübertragungsvorrichtung erfolgen. Eine ausschließliche Steuerung oder Regelung über die an der Kraftübertragungsvorrichtung der Bremse anliegende Kraft scheidet jedoch aus sicherheitstechnischen Gründen aus, da Fehler an der Kraftübertragungsvorrichtung sowie die oben erwähnten Hystereseffekte in Betracht gezogen werden müssen. Aus diesen Gründen wird bei elektronischen Feststellbremsanlagen in der Regel eine kombinierte Kraft-Weg-Steuerung eingesetzt.

Gemäß dem Stand der Technik gestaltet sich das Anziehen einer Parkbremse wie folgt: Ausgehend von einer Startposition wird die Parkbremse zugespannt. Innerhalb eines vorgegebenen Weges muss die an der Kraftübertragungsvorrichtung anliegende Kraft einen vorgeschriebenen Wert erreichen beziehungsweise überschreiten. Dabei gelten für den zurückzulegenden Weg feste zulässige Minimal- und Maximalgrenzen. Da neben den erwähnten Hystereseffekten die Parkbremse in der Regel auch Alterungs-und Ermüdungserscheinungen zeigt und deshalb die Kraft-Weg-Beziehung nicht nur im Verlauf eines Anzieh-Lösevorgangs, sondern sich auch im Laufe der Betriebsdauer der Parkbremse verändert, muss der Bereich zwischen den Minimal- und Maximalgrenzen relativ groß gewählt werden. Andernfalls würde eine unerwünschte häufige Nachjustierung der Parkbremse notwendig, was einer wartungsfreien Funktionalität der Parkbremse über die gesamte Lebensdauer des Fahrzeugs entgegen stehen würde. Dies hat zur Folge, dass Veränderungen in der Weg-Kraft-Charakteristik der Parkbremse, die im Gegensatz zu der almählichen Alterung abrupt oder nur temporär auftreten, aber noch innerhalb des relativ weit gefassten zulässigen Bereichs liegen, nicht erkannt werden. Gerade diese plötzlichen beziehungsweise schnellen Veränderungen aber können sicherheitsrelevant sein. Eine gattungsgemäße Parkbremse ist aus der Patentschrift US 6,249,737 B1 bekannt.

Der Erfindung liegt die Aufgabe zugrunde, die Nachteile des Standes der Technik zu beseitigen und insbesondere ein Verfahren zur Steuerung einer elektronischen Parkbremse beziehungsweise eine elektronische Parkbremse zur Verfügung zu stellen, so dass sicherheitsrelevante Veränderungen der Parkbremse besser erkannt werden.
Diese Aufgabe wird mit den Merkmalen der unabhängigen Ansprüche gelöst.
Vorteilhafte Ausgestaltungen und Weiterbildungen der Erfindung ergeben sich aus den abhängigen Ansprüchen.
Die Erfindung baut auf dem gattungsgemäßen Verfahren dadurch auf, dass bei einem Anziehen der Parkbremse eine Kraftmessung erfolgt und in Abhängigkeit der gemessenen Kraft mindestens eine erste Position und somit mindestens eine Kraft-Positions-Zuordnung ermittelt wird, und dass die erste Position mit einer vorgegebenen Position zum Zwecke einer Plausibilisierung der Kraft-Positions-Zuordnung verglichen wird. Die beim Anziehen der Parkbremse ermittelte, einer bestimmten Kraft zugeordnete Position erlaubt einen Vergleich dieser Position mit einer der Kraft zugeordneten vorgegebenen Position. Auf diese Weise kann die Plausibilität des beim Anziehen der Parkbremse ermittelten Kraft-Positions-Wertepaars geprüft werden und so eine höhere Sicherheit des Anziehvorgangs beziehungsweise des Betriebs der Parkbremse im Allgemeinen erreicht werden. Die vorgegebene Position kann beispielsweise das Ergebnis einer Berechnung sein, einen Erfahrungswert darstellen oder unter anderen Umständen oder zu einem anderen Zeitpunkt gemessen sein. Die Plausibilität der aktuellen Kraft-Positions-Zuordnung an der ersten Position kann hinsichtlich einer auffälligen Abweichung von dem an der vorgegebenen Position ermittelten Wertepaar überprüft werden. Dies kann im Weiteren bei einer sicherheitsrelevanten Betrachtung der Werte berücksichtigt werden. Auf diese Weise können temporär auftretende Fehler, die bei einer Parkbremse gemäß dem Stand der Technik innerhalb der relativ weit auseinander liegenden Toleranzgrenzen liegen, detektiert und gemeldet oder in irgendeiner Form berücksichtigt werden. Insgesamt führt dieses Verfahren zu einer frühzeitigeren Erkennung und genaueren Identifizierung von Fehlern, was die Betriebssicherheit und Zuverlässigkeit über die gesamte Lebensdauer der Parkbremse erhöht. Die Ermittlung der Positions- und Kraftwerte kann direkt über eine Positions- und eine Kraftmessung erfolgen, zusätzlich werden auch die Geschwindigkeit des Aktuators und/oder der Gradient der an der Kraftübertragungseinrichtung anliegenden Kraft herangezogen. In einer vorteilhaften Ausführungsform des Verfahrens kann vorgesehen sein, dass bei der ersten Position eine Kraft vorliegt, die einem angezogenen Zustand der Parkbremse entspricht. Es erfolgt also beim Anziehen der Parkbremse eine Kraftmessung im Hinblick darauf, ob die einem angezogenem Zustand der Parkbremse entsprechende Kraft an der Kraftübertragungsvorrichtung anliegt. Die dabei ermittelte Position wird mit einer Position verglichen, die eine Plausibilisierung des als "angezogen" ermittelten Zustands der Parkbremse ermöglicht. Nach einer Sicherheitsbetrachtung im Hinblick auf das Vergleichsergebnis kann je nach den angewendeten Sicherheitskriterien der Status des Systems auf "angezogen" oder "nicht angezogen" gesetzt werden.

Gemäß einer weiteren vorteilhaften Ausführungsform des Verfahrens kann vorgesehen sein, dass bei dem Anziehen der Parkbremse durch Ermitteln mehrerer Kraft-Positions-Zuordnungen mindestens ein Teil einer Kraft-Positions-Kennlinie aufgenommen wird. Werden beim Anziehen der Parkbremse mehrere Kraft-Positions-Zuordnungen ermittelt, kann die momentane Charakteristik der Parkbremse beim Anziehen in Gestalt einer Kraft-Positions-Kennlinie aufgenommen werden. Diese kann einen bestimmten relevanten Abschnitt des Anziehens der Parkbremse repräsentieren. Es können aber auch alternativ oder zusätzlich mehrere Abschnitte beziehungsweise die gesamte Kraft-Positions-Kennlinie beim Anziehen der Parkbremse aufgenommen werden. Dies ermöglicht eine erhebliche Verfeinerung der Plausibilisierungsmöglichkeiten der ermittelten Kraft-Positions-Zuordnungen, da so der Vergleich nicht nur anhand eines einzelnen Kraft-Positions-Wertepaares, sondern eines wesentlichen Teils der Kraft-Positions-Kennlinie erfolgen kann. Darüber hinaus wird die sicherheitsrelevante Überprüfung verbessert, da eine größere Anzahl von Werten aus einem weiter auseinanderliegenden Bereich einbezogen werden können. Dies verringert zum einen einen möglicherweise vorhandenen Messfehler, zum anderen können über die aus der Umgebung der ersten Position stammenden Messwerte eine geschwindigkeitsbezogene und/oder auf einen Kraftgradienten gerichtete Auswertung ermöglichen oder erleichtern.

Das erfindungsgemäße Verfahren kann außerdem dadurch vorteilhaft weitergebildet werden, dass die vorgegebene Position eine für einen angezogenen Zustand der Parkbremse typische Position ist. Der Vergleich der ersten Position beziehungsweise eines Teils oder der gesamten Kraft-Positions-Kennlinie mit einer vorgegebenen Position, die für den angezogenen Zustand der Parkbremse typisch ist, ist eine besonders vorteilhafte Plausibilisierung der den momentanen Zustand der Parkbremse repräsentierenden Kraft-Positions-Zuordnung. Der typische Positionswert kann ein ab Werk vorgegebener spezifizierter und fester Wert sein, er kann sich aber auch durch eine Berechnung aus anderweitig ermittelten Systemdaten ergeben oder durch eine Kombination aus beiden Möglichkeiten entstehen. Dieser typische Wert erlaubt eine Plausibilisierung anhand anderweitig ermittelter oder berechneter Daten und stellt so auch eine wichtige sicherheitsrelevante Überprüfung da.

In einer ebenfalls vorteilhaften Ausführungsform kann vorgesehen sein, dass die vorgegebene Position im Rahmen der Ermittlung der ersten Position bei einem früheren Anziehvorgang ermittelt wurde. Diese Art der Plausibilisierung ergänzt bzw. ersetzt den Vergleich der an der ersten Position ermittelten Kraft-Positions-Zuordnung mit typischen Werten. Der Vergleich mit einer bei einem früheren Anziehvorgang ermittelten Kraft-Positions-Zuordnung bietet insbesondere die Möglichkeit, zu bestimmten Zeitpunkten auftretende geringfügige, aber dennoch sicherheitsrelevante Abweichungen zu erkennen und gegebenenfalls als Fehler zu melden. Speziell Alterungsvorgänge oder Ermüdungserscheinungen können so anhand eines charakteristischen zeitlichen Verlaufes über mehrere Anziehvorgänge hinweg erkannt und berücksichtigt werden.

Das erfindungsgemäße Verfahren kann außerdem derart vorteilhaft ausgestaltet sein, dass die erste Position mit Positionen aus einem vorgegebenen Bereich verglichen wird. Auf diese Weise wird in Verbindung mit den vorhergenannten Merkmalen der Vergleich der momentan aufgenommenen Kraft-Positions-Kennlinie beim Anziehen der Parkbremse mit Kennlinien, die beispielsweise ab Werk als spezifizierte und typische Kennlinie vorgegeben sind oder bei vorhergehenden Anziehvorgängen ermittelt wurden, ermöglicht. Dies erlaubt eine weitgehende und umfassende Plausibilisierung der ermittelten Messwerte und bietet gleichzeitig eine umfangreiche sicherheitstechnische Analyse der augenblicklichen und zurückliegenden Funktionalität der Parkbremse. Es können somit auf Grundlage von aktuell ermittelten, zurückliegend abgespeicherten und/oder fest eingetragenen Werten die Funktionalität und Sicherheit der Parkbremse über die gesamte Lebensdauer des Kraftfahrzeugs verfolgt und sichergestellt werden.

Die Erfindung baut auf der gattungsgemäßen Vorrichtung dadurch auf, dass bei einem Anziehen der Parkbremse eine Kraft bestimmbar ist und in Abhängigkeit der gemessenen Kraft mindestens eine erste Position und somit mindestens eine Kraft-Positions-Zuordnung bestimmbar ist, und dass die erste Position mit einer vorgegebenen Position zum Zwecke einer Plausibilisierung der Kraft-Positions-Zuordnung verglichen wird. Auf diese Weise werden die Vorteile und Besonderheiten des erfindungsgemäßen Verfahrens auch im Rahmen einer Vorrichtung realisiert. Dies gilt auch für die nachfolgend angegebenen besonders bevorzugten Ausführungsform der erfindungsgemäßen Vorrichtung.

Eine vorteilhafte Weiterbildung der erfindungsgemäßen Vorrichtung ergibt sich dadurch, dass bei der ersten Position eine Kraft vorliegt, die einem angezogenen Zustand der Parkbremse entspricht.

Eine ebenfalls vorteilhafte Weiterbildung ergibt sich dadurch, dass bei dem Anziehen der Parkbremse durch Ermitteln mehrerer Kraft-Positions-Zuordnungen mindestens ein Teil einer Kraft-Positions-Kennlinie aufnehmbar ist.

Die erfindungsgemäße Vorrichtung ist ebenfalls dadurch besonders vorteilhaft weitergebildet, dass die vorgegebene Position eine für einen angezogenen Zustand der Parkbremse typische Position ist.

Des Weiteren kann eine Ausführungsform dadurch vorteilhaft weitergebildet sein, dass die vorgegebene Position im Rahmen der Ermittlung der ersten Position bei einem früheren Anziehvorgang bestimmbar ist.

Eine ebenfalls nützliche Weiterbildung der erfindungsgemäßen Vorrichtung besteht darin, dass die erste Position mit Positionen aus einem vorgegebenen Bereich verglichen wird.

Die Erfindung betrifft weiterhin eine Betriebsbremse mit einer erfindungsgemäßen Vorrichtung sowie ein Kraftfahrzeug mit einer erfindungsgemäßen elektronischen Parkbremse.

Der Erfindung liegt die Erkenntnis zugrunde, dass durch eine Ermittlung von Kraft-Positions-Zuordnungen während des Anziehvorgangs einer elektronischen Parkbremse eine Plausibilisierung der ermittelten Messwerte stattfinden kann. Insbesondere durch die Aufnahme mehrerer Kraft-Positions-Zuordnungen und Vergleichen derselben mit spezifizierten typischen oder bei vorhergehenden Anziehvorgängen ermittelten Wertepaaren kann eine umfangreiche und zuverlässige Plausibilisierung sowie eine erheblich verbesserte Sicherheitsüberprüfung des Systems erreicht werden.

Die Erfindung wird nun unter Bezugnahme auf die beigefügten Zeichnungen anhand bevorzugter Ausführungsformen beispielhaft erläutert.

Es zeigen:
- Figur 1: ein Flussdiagramm zur Erläuterung eines ersten erfindungsgemäßen Anziehvorgangs einer Park-bremse;
- Figur 2: ein Flussdiagramm zur Erläuterung eines Lösevorgangs einer Parkbremse;
- Figuren 3a-3b: Flussdiagramme zur Erläuterung eines ersten erfindungsgemäßen Kalibriervorgangs einer Parkbremse;
- Figur 4: ein Flussdiagramm zur Erläuterung eines zweiten erfindungsgemäßen Anziehvorgangs einer Parkbremse;
- Figur 5: ein Flussdiagramm zur Erläuterung eines zweiten erfindungsgemäßen Kalibriervorgangs einer Parkbremse;
- Figuren 6a-6c: Funktionsblockdiagramme zur Erläuterung einer ersten erfindungsgemäßen Vorrichtung in unterschiedlichen Zuständen;
- Figur 7: ein Funktionsblockdiagramm zur Erläuterung einer zweiten erfindungsgemäßen Vorrichtung;
- Figur 8: ein Kraft-Positions-Diagramm.

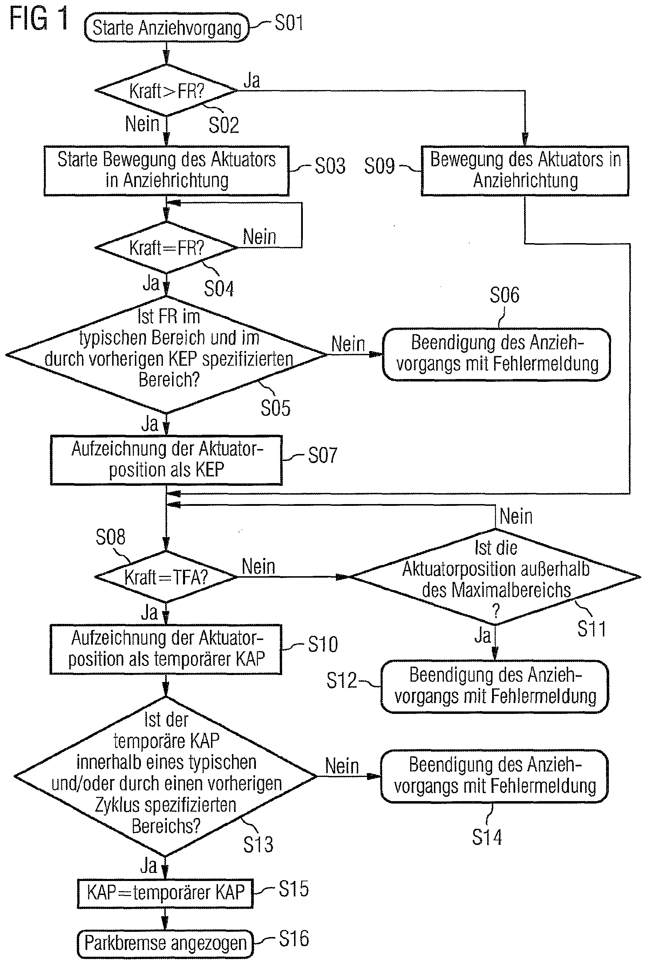

Figur 1 zeigt ein Flussdiagramm zur Erläuterung eines ersten erfindungsgemäßen Anziehvorgangs einer Parkbremse. Das Verfahren setzt mit dem Schritt S01 ein, mit dem die elektronische Steuerung bzw. Regelung der Feststellbremsanlage den Befehl "Parkbremse anziehen" beginnt umzusetzen. Dazu findet, in Entscheidung S02 dargestellt, eine Überprüfung der momentan an der Kraftübertragungsvorrichtung anliegenden Kraft statt. Ist diese kleiner als eine sogenannte Referenzkraft ("FR = force reference"), wird der Aktuator in Anziehrichtung bewegt (Schritt S03). Sowie die an der Kraftübertragungsvorrichtung anliegende Kraft den Wert FR erreicht oder überschreitet (Entscheidung S04), wird überprüft, ob der momentane Kraftwert innerhalb eines typischen Bereichs und innerhalb eines Bereichs liegt, der durch den vom vorherigen Zyklus bestimmten Krafteinsatzpunkt (KEP) spezifiziert wird (Entscheidung S05). Fällt diese Plausibilitätsprüfung negativ aus, kann hier der Anziehvorgang mit einer Fehlermeldung (Schritt S06) enden und/oder es kann ein Fehler gemeldet werden. Im Falle eines positiven Prüfungsergebnis fährt das Verfahren mit Schritt S07 fort. Hier wird die momentane Aktuatorposition als neuer Krafteinsatzpunkt (KEP) abgespeichert. Nach diesem Schritt setzt sich das Verfahren mit der Entscheidung S08 fort, in der wiederum eine Überprüfung der momentan anliegenden Kraft vorgenommen wird. Diese Überprüfung findet ebenfalls statt, wenn das Verfahren bei der Überprüfung der an der Kraftübertragungsvorrichtung anliegenden Kraft in Entscheidung S02 einen Wert ermittelt hat, der größer als FR ist und mit Schritt S09 ebenfalls wie in Schritt S03 die Bewegung des Aktuators in Anziehrichtung initiiert hat. Überschreitet oder erreicht in Entscheidung S08 die anliegende Kraft einen zweiten Grenzwert, die Sollanziehkraft ("TFA = target force apply"), so wird mit Schritt S10 die augenblickliche Aktuatorposition als temporärer Kraftabschaltpunkt aufgezeichnet. Anderweitig erfolgt eine Überprüfung der momentanen Aktuatorposition hinsichtlich eines Maximalwertes (Entscheidung S11). Ist dieser nicht überschritten, setzt sich das Verfahren mit der Entscheidung S08 fort, andernfalls endet das Verfahren mit einer Fehlermeldung an dieser Stelle mit Schritt S12. Mit dem Aufzeichnen des Kraftabschaltpunktes wird in Entscheidung S13 überprüft, ob der Wert KAP innerhalb eines typischen und/oder durch einen vorherigen Zyklus spezifizierten Bereichs liegt. Im Falle eines negativen Resultats endet das Verfahren an dieser Stelle mit einer Fehlermeldung in Schritt S14, im anderen Falle wird der temporäre Kraftabschaltpunkt als neu zu verwendender Kraftabschaltpunkt KAP gespeichert (Schritt S15). Jetzt befindet sich die Feststellbremsanlage im festgestellten beziehungsweise zugespannten Zustand (Schritt S16).

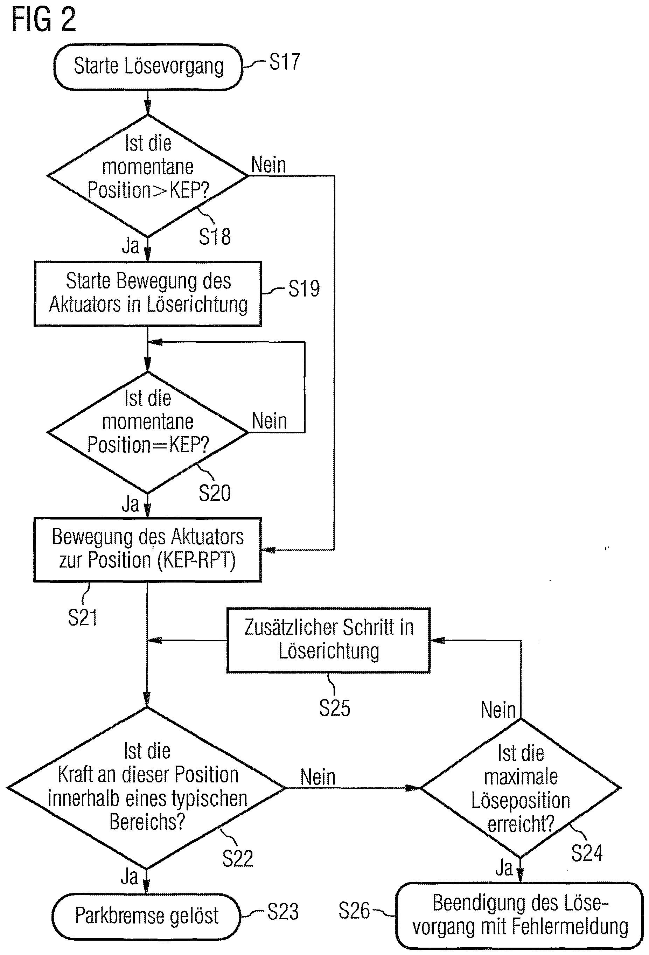

Figur 2 zeigt ein Flussdiagramm zur Erläuterung eines Lösevorgangs einer Parkbremse. Erteilt, wie in Figur 2 abgebildet, die Steuerung bzw. Regelung, einen Fahrerwunsch repräsentierend oder durch eine automatische Funktion ausgelöst, den Befehl "Parkbremse lösen", dargestellt in Schritt S17, erfolgt eine Steuerung beziehungsweise Überprüfung der Position des Aktuators. Es wird, dargestellt in Entscheidung S18, die Position hinsichtlich des Erreichens des KEP verglichen. Ist dieser nicht erreicht, beginnt sich in Schritt S19 der Aktuator in eine der Anziehrichtung entgegengerichtete Richtung, nämlich der Löserichtung zu bewegen. Diese Bewegung dauert an, bis in Entscheidung S20 bei der Überprüfung der momentanen Aktuatorposition festgestellt wird, dass der KEP erreicht ist. Dann setzt sich die Bewegung des Aktuators ebenfalls in Löserichtung mit Schritt S21 fort. Allerdings wird jetzt keine absolute Position angefahren, sondern der Aktuator wird relativ zum KEP um den Lösepositionsweg ("RPT = release position travel") verfahren. An dieser Stelle setzt das Verfahren ebenfalls ein, wenn in Schritt 18 bereits ein Erreichen des KEP festgestellt wurde. Nach dem Zurücklegen des RPT wird erneut, dargestellt in Entscheidung S22, die an der Kraftübertragungsvorrichtung anliegende Kraft ermittelt. Unterschreitet diese einen Solllösekraft ("TFR = target force release") genannten Grenzwert und befindet sie sich innerhalb eines typischen Bereichs, ist mit Schritt S23 das Verfahren beendet. Anderenfalls wird überprüft, ob die Aktuatorposition einen Maximalwert erreicht hat (Entscheidung S24). Wenn dies nicht der Fall ist, wird der Aktuator um einen weiteren zusätzlichen Schritt in Löserichtung bewegt (Schritt S25) und erneut mit Schritt S22 die anliegende Kraft überprüft. Im anderen Fall endet das Verfahren an dieser Stelle in Schritt S26 mit einer Fehlermeldung. Das Verfahren wiederholt die Schritte S22, S24 und S25 iterativ solange, das heißt, es verfährt den Aktuator in Löserichtung und vergleicht die dort anliegende Kraft mit dem Grenzwert TFR, bis die Restkraft unter den Grenzwert gefallen ist bzw. ein maximaler Löseweg gefahren ist. Damit ist das Verfahren beendet.

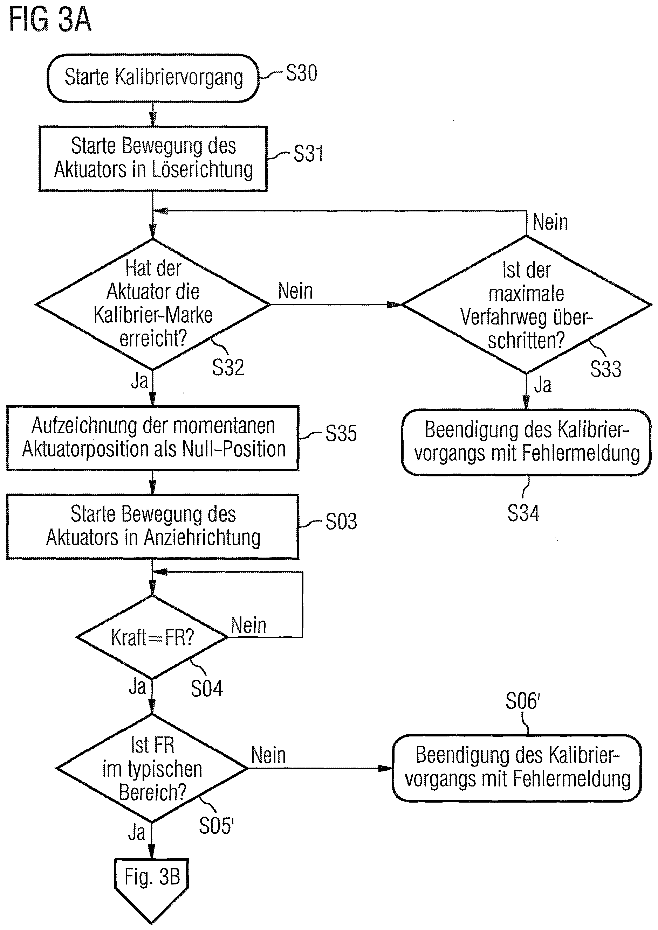

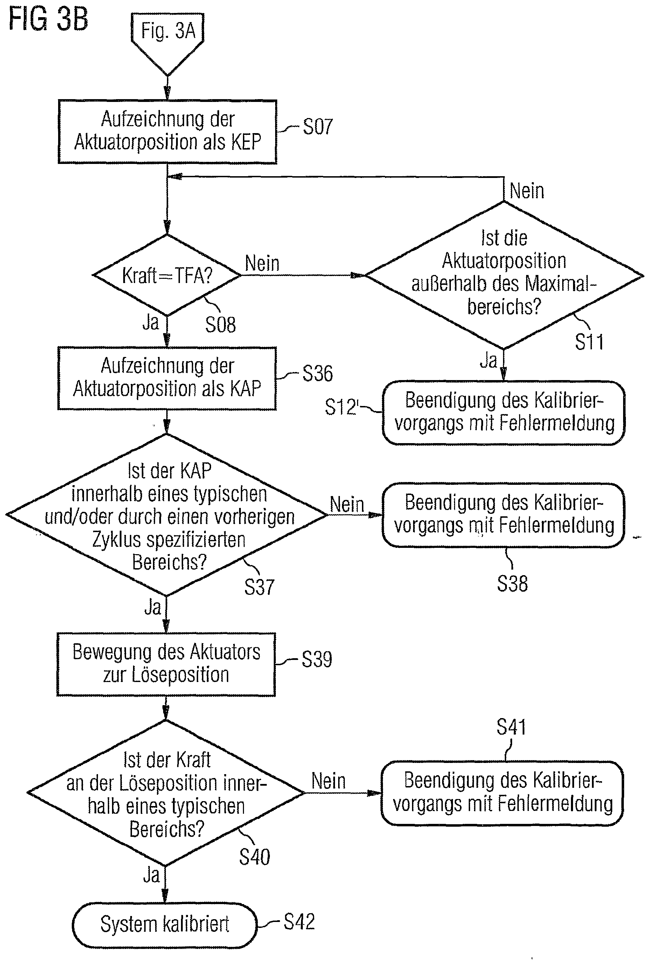

Die Figuren 3a-3b zeigen Flussdiagramme zur Erläuterung eines ersten erfindungsgemäßen Kalibriervorgangs einer Parkbremse Es kann vorgesehen sein, dass das erfindungsgemäße Verfahren einen Kalibrierlauf durchführt. Dazu setzt das Verfahren in Figur 3a mit Schritt S30 ein, mit dem der Kalibrierlauf gestartet wird. Dabei wird zunächst der Aktuator in Löserichtung verfahren (Schritt S31). Gleichzeitig wird in Entscheidung S32 ermittelt, ob der Aktuator eine Null-Position bzw. eine Kalibriermarke erreicht hat. Ist dies nicht der Fall, wird, falls ein maximaler Verfahrweg überschritten wurde (Entscheidung S33), das Verfahren in Schritt S34 mit einer Fehlermeldung beendet. Im anderen Falle setzt sich das Verfahren mit der Entscheidung S32 fort. Sowie die Kalibriermarke bzw. die Null-Position erreicht worden ist, wird in Schritt S35 die augenblickliche Position des Aktuators als Null-Position abgespeichert. Im Folgenden durchläuft das Verfahren Schritte, die den vorhergehend zu Figur 1 beschriebenen Schritten S03 bis S08, S11 und S12 entsprechen und deshalb nicht erneut erläutert werden. Dabei sind die Schritte S05, S06 und S12 entsprechend anzupassen und werden deshalb mit S05', S06' und S12' bezeichnet. Nachdem, wie in Figur 3b dargestellt, in Entscheidung S08 das Anliegen von TFA an der Kraftübertragungsvorrichtung erkannt wurde, wird in Schritt S36 die momentane Position als Kraftabschaltpunkt (KAP) abgespeichert. Es wird weiter in Entscheidung S37 überprüft, ob der KAP-Wert innerhalb eines typischen und/oder durch einen vorherigen Zyklus spezifizierten Bereichs liegt. Sollte dies nicht der Fall sein, wird das Verfahren in Schritt S38 mit einer Fehlermeldung beendet. Das Verfahren setzt sich dann mit Schritt 39 fort und löst den Aktuator bis zur berechneten Löseposition. Dort erfolgt eine Überprüfung der an der Kraftübertragungsvorrichtung anliegenden Kraft (Entscheidung S40). Sollte diese sich nicht innerhalb eines typischen Bereichs befinden, wird das Verfahren in Schritt S41 mit einer Fehlermeldung beendet, andernfalls befindet sich das System mit S42 in einem kalibrierten Zustand.

So kann für die Punkte KEP und KAP eine Absolutpositionierung vorgenommen werden, die unter anderem zur Plausibilisierung der in den weiteren Anziehvorgängen ermittelten Werte herangezogen werden kann.

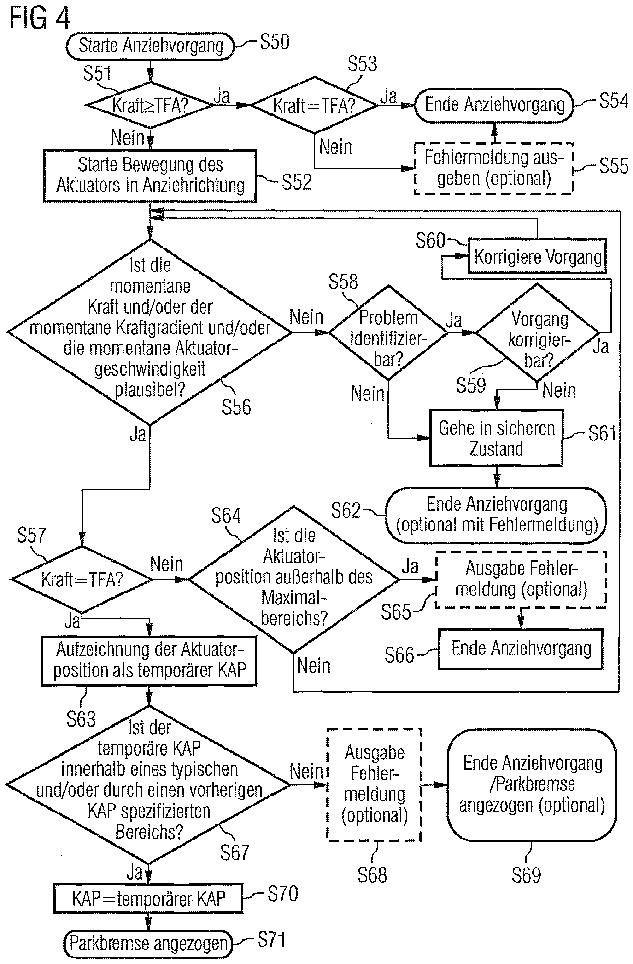

Figur 4 zeigt ein Flussdiagramm zur Erläuterung eines zweiten erfindungsgemäßen Anziehvorgangs einer Parkbremse. Das Verfahren setzt mit dem Schritt S50 ein, mit dem die elektronische Steuerung beziehungsweise Regelung der Feststellbremsanlage den Befehl "Parkbremse anziehen" beginnt umzusetzen. Dazu findet, in Entscheidung S51 dargestellt, eine Überprüfung der momentan an der Kraftübertragungsvorrichtung anliegenden Kraft statt. Ist diese kleiner als die Sollanziehkraft ("TFA = Target Force Apply"), wird der Aktuator in Anziehrichtung bewegt (Schritt S52). Ist hingegen die momentan anliegende Kraft größer oder gleich der Sollanziehkraft, wird in Entscheidung S53 überprüft, ob die momentan anliegende Kraft gleich der Sollanziehkraft TFA ist. Ist dem so, endet das Verfahren in Schritt S54. Im anderen Falle wird in Schritt S55 eine Fehlermeldung erzeugt und das Verfahren endet ebenfalls mit Schritt S54. Das Erzeugen einer Fehlermeldung in Schritt S55 kann optional entfallen. Nach Schritt S52 können in Schritt S56 mehrere Größen überwacht werden. Es können einzeln, gleichzeitig oder in beliebiger Kombination die an der augenblicklichen Position anliegende Kraft, der an der augenblicklichen Position vorhandene Kraftgradient und/oder die momentane Geschwindigkeit des Aktuators ermittelt werden. In Abhängigkeit von der Plausibilität der ermittelten Messwerte wird der Anziehvorgang des Aktuators mit Entscheidung S57 fortgesetzt oder im Falle einer nicht vorhandenen Plausibilität in Entscheidung S58 versucht, das die nicht vorhandene Plausibilität verursachende Problem zu identifizieren. Ist das Problem bekannt, wird überprüft (Entscheidung S59), ob der augenblickliche, das Problem verursachende Vorgang korrigierbar ist. Sollte dies der Fall sein, wird in Schritt S60 der augenblickliche Vorgang abgeändert, um das Problem zu beseitigen und das Verfahren setzt sich in Schritt S56 fort. Wird in Entscheidung S59 hingegen festgestellt, dass der Vorgang nicht korrigierbar ist oder sollte in Entscheidung S58 festgestellt werden, dass das Problem nicht bekannt ist, wird die Parkbremse in einen sicheren Zustand gebracht (Schritt S61) und der Anziehvorgang endet (optional mit einer Fehlermeldung) an dieser Stelle mit Schritt S62. Die mit Entscheidung S56 beginnende Plausibilitätsprüfung kann für die reine Funktionalität des Anziehvorgangs auch optional entfallen. Wird in Entscheidung S57 festgestellt, dass die momentan anliegende Kraft der Sollanziehkraft TFA entspricht, wird die augenblickliche Position als temporärer Kraftabschaltpunkt KAP aufgezeichnet (Schritt S63). Ist die Sollanziehkraft noch nicht erreicht, wird in Entscheidung S64 überprüft, ob sich die augenblickliche Position außerhalb eines maximal zulässigen Bereicht befindet. Ist dies nicht der Fall, setzt sich das Verfahren mit Entscheidung S56 fort. Andernfalls wird optional in Schritt S65 eine Fehlermeldung erzeugt und das Verfahren endet mit Schritt S66. In Entscheidung S67, die sich an dem Schritt S63 anschließt, wird überprüft, ob sich der temporäre Kraftabschaltpunkt innerhalb eines typischen spezifizierten Bereiches und innerhalb eines Bereiches befindet, der durch vorhergehende Kraftabschaltpunkte spezifiziert ist. Sollte dies nicht der Fall sein, kann optional in Schritt S68 eine Fehlermeldung erzeugt werden und das Verfahren endet mit Schritt S69. Optional kann an dieser Stelle mit Beendigung des Anziehvorgangs auch die Parkbremse als "angezogen" betrachtet werden. Im Fall einer positiven Überprüfung des temporären Kraftabschaltpunktes in Entscheidung S67 wird in Schritt S70 der temporäre Kraftabschaltpunkt als neu zu verwendender Kraftabschaltpunkt KAP festgelegt. Jetzt befindet sich die Feststellbremsanlage im festgestellten beziehungsweise zugespannten Zustand (Schritt S71).

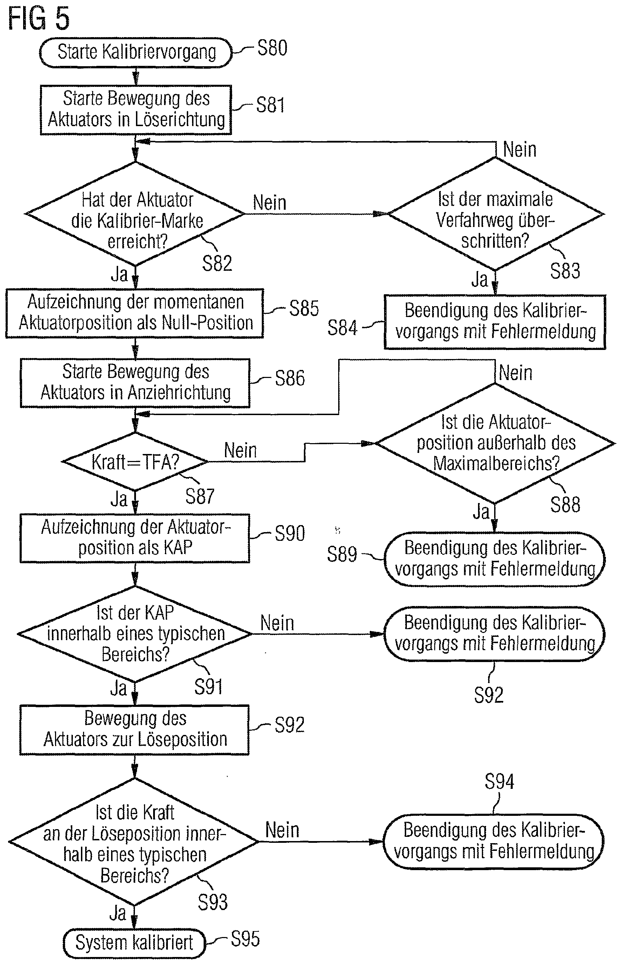

Figur 5 ist ein Flussdiagramm zur Erläuterung eines erfindungsgemäßen zweiten Kalibriervorgangs einer Parkbremse. Der Kalibriervorgang setzt mit Schritt S80 ein. Dabei wird zunächst der Aktuator in Löserichtung verfahren (Schritt S81). Gleichzeitig wird in Entscheidung S82 ermittelt, ob der Aktuator eine Null-Position beziehungsweise eine Kalibriermarke erreicht hat. Ist dies nicht der Fall, wird, falls ein maximaler Verfahrweg überschritten wurde (Entscheidung S83), das Verfahren in Schritt S84 mit einer Fehlermeldung beendet. Im anderen Falle setzt sich das Verfahren mit der Entscheidung S82 fort. Sowie die Kalibriermarke beziehungsweise die Null-Position erreicht worden sind, wird in Schritt S85 die augenblickliche Position des Aktuators als Null-Position abgespeichert. Danach beginnt mit Schritt S86 ein Anziehvorgang des Aktuators. In Entscheidung S87 wird überprüft, ob die Sollanziehkraft TFA am Aktuator erreicht ist. Ist dies nicht der Fall, wird, sofern in Entscheidung S88 festgestellt wird, dass ein maximaler Bereich für die Position des Aktuators nicht überschritten ist, der Anziehvorgang weiter fortgesetzt. Ist hingegen ein maximaler Bereich für die Aktuatorposition überschritten, endet in Schritt S89 der Kalibrationsvorgang mit einer Fehlermeldung. Wird in Entscheidung S87 festgestellt, dass die Sollanziehkraft am Aktuator erreicht ist, wird die augenblickliche Position als Kraftabschaltpunkt KAP (Schritt S90) festgelegt. Daraufhin wird in Entscheidung S91 geprüft, ob dieser Kraftabschaltpunkt KAP innerhalb eines typischen Bereichs liegt. Im Falle eines negativen Prüfungsergebnisses endet der Kalibriervorgang an dieser Stelle mit einer Fehlermeldung in Schritt S92. Befindet sich der Kraftabschaltpunkt KAP innerhalb eines typischen Bereichs, kann ein Lösevorgang in Schritt S92 eingeleitet werden. Dabei wird die Bremse bis zu einem Lösepunkt RP ("RP = Release Point") geöffnet. In Entscheidung S93 wird zusätzlich überprüft, ob die am Aktuator anliegende Kraft am Lösepunkt innerhalb eines typischen Bereichs liegt. Ist dies nicht der Fall, endet der Kalibriervorgang mit einer Fehlermeldung in Schritt S94. Die Schritte S92 bis S94 können optional auch wegfallen. Im Falle einer positiven Überprüfung der am Aktuator anliegenden Kraft am Lösepunkt (Entscheidung S93) beziehungsweise am Kraftabschaltpunkt (Entscheidung S91), befindet sich das System mit Schritt S95 in einem kalibrierten Zustand.

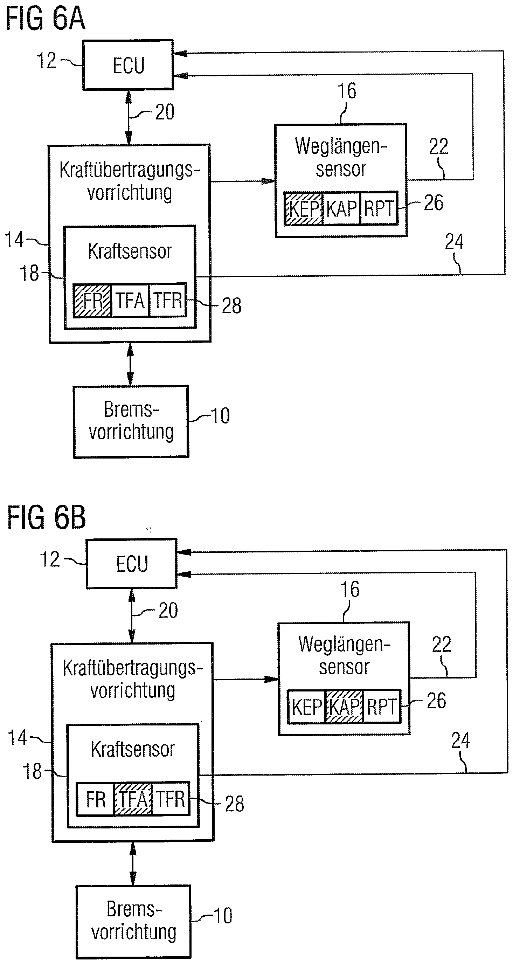

Die Figuren 6a - 6b zeigen Funktionsblockdiagramme zur Erläuterung einer ersten erfindungsgemäßen Vorrichtung in unterschiedlichen Zuständen. Die abgebildete Ausführungsform weist neben dem gemäß dem Stand der Technik bekannten elektronischen, mechanischen und eventuell hydraulischen Komponenten, hier unter dem Begriff Bremsvorrichtung 10 zusammengefasst, eine elektronische Steuereinheit (ECU) 12, eine Kraftübertragungsvorrichtung 14, sowie einen Weglängensensor 16 und einen Kraftsensor 18 auf. In diesem Zusammenhang soll wie auch schon im beschreibenden Teil der Begriff Kraftübertragungsvorrichtung sowohl einen Aktuator, alle Teile, die Kräfte auf die Bremsen übertragen als auch Bestandteile, an denen die Kraft des Aktuators wirkt, umfassen. Der Kraftsensor 18 kann an beliebiger geeigneter Stelle sowohl innerhalb dieser Kraftübertragungsvorrichtung 14 als auch außerhalb, eventuell auch in der Bremsvorrichtung 10 angebracht werden. Die elektronische Steuereinheit 12 ist über die Signalleitung 20 mit der Kraftübertragungsvorrichtung 14 verbunden, die in mechanischer Wirkverbindung mit der Bremsvorrichtung 10 steht. Der Weglängensensor 16 erfasst ein von der Kraftübertragungsvorrichtung 14 geliefertes Positionssignal und gibt dieses als Positionsinformation 22 an die elektronische Steuereinheit 12 weiter. Analog erzeugt der Kraftsensor 18 ein der momentan an der Kraftübertragungsvorrichtung oder der Bremsvorrichtung anliegenden Kraft entsprechendes Messsignal 24 und gibt dieses ebenfalls an die elektronische Steuereinheit 12 aus. Sowohl der Weglängensensor 16 als auch der Kraftsensor 18 sind mit einer symbolischen Anzeige 26 beziehungsweise 28 versehen, welche verschiedene ausgewählte Signale abbildet. Bei dem Weglängensensor 20 sind die Signale KAP, KEP und RPT hervorgehoben, die Anzeige 28 des Kraftsensors 18 hebt die Signale FR, TFA und TFR hervor. Die in den Figuren 2a, 2b und 2c abgebildete Ausführungsform ist in ihren Bestandteilen und damit auch in ihren Bezugszeichen identisch, sie unterscheidet sich lediglich durch die von den Sensoren 16 und 18 gelieferten Signale 20 und 22, was unterschiedlichen Aktuatorpositionen und damit unterschiedlichen Zuständen der Parkbremse entspricht.

In Figur 6a hat die elektronische Steuerung 12 dem Aktuator der Kraftübertragungsvorrichtung 14 den Befehl erteilt, sich in Anziehrichtung zu bewegen, das heißt, die Parkbremse soll angezogen werden. Im momentan abgebildeten Zustand liegt an der Kraftübertragungsvorrichtung 14 die Referenzkraft FR an. Entsprechend liefert der Wegsensor 16 das den Krafteinsatzpunkt (KEP) darstellende Signal 22 an die elektronische Steuereinheit 12, die diesen Weglängenwert aufzeichnet, sofern die Plausibilitätsprüfung erfolgreich durchgeführt wurde.

In Figur 6b ist die Stellung für den festgestellten Zustand der Bremse erreicht. Dabei liegt an der Kraftübertragungsvorrichtung 14 die sogenannte Sollanziehkraft (TFA) an, deren Betrag mittels des Kraftsensors 18 als Signal 24 an die elektronische Steuereinheit 12 weitergeleitet wird. Dieser Kraftbetrag wird nun mit Hilfe des Weglängensensors 16 mit der momentanen Aktuatorposition korreliert. Dazu speichert die elektronische Steuereinheit 12 das Weglängensignal 22 zunächst als temporären Kraftabschaltpunkt zwischen, vergleicht diesen im Rahmen einer Plausibilitätsprüfung mit einem typischen und/oder durch einen vorherigen Zyklus spezifizierten Wertebereich und speichert ihn im Falle einer erfolgreichen Überprüfung als neu zu verwendenden Kraftabschaltpunkt (KAP) ab.

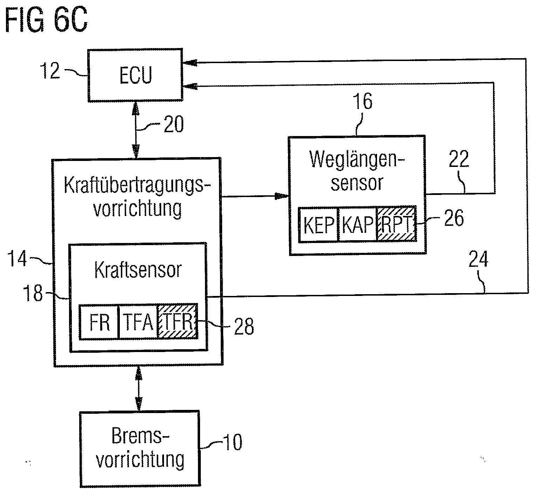

Figur 6c bildet einen Zustand der elektronischen Feststellbremsanlage ab, der beim Lösen der Parkbremse eingenommen wird. Dabei wird der Aktuator der Kraftübertragungsvorrichtung 14 über ein Signal 20 der elektronischen Steuereinheit 12 zunächst wiederum bis zum Erreichen des Krafteinsatzpunktes (KEP) verfahren, entsprechend dem in Figur 2a abgebildeten Zustand. Nach Erreichen des KEP wird der Aktuator der Kraftübertragungsvorrichtung 14 von dort ausgehend um den Lösepositionsweg RPT weiter in Löserichtung verfahren. Entsprechend zeigt der Weglängensensor 16 als Signal 22 das Erreichen des RPT an. Die elektronische Steuereinheit 12 erfasst dieses Signal 22 und vergleicht das vom Kraftsensor 18 gelieferte Kraftsignal 24 mit einem Grenzwert, der Solllösekraft (TFR). Da momentan am Aktuator der Kraftübertragungsvorrichtung 14 tatsächlich die Solllösekraft TFR anliegt, stellt der in Figur 2c dargestellte Zustand den gelösten Zustand der Parkbremse dar.

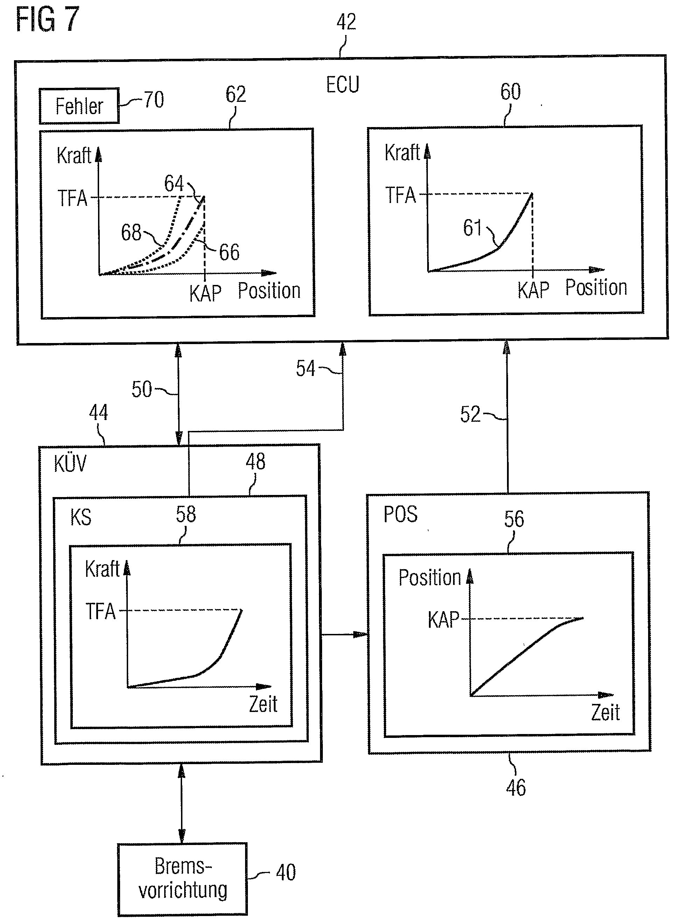

Die Figur 7 zeigt ein Funktionsblockdiagramm zur Erläuterung einer zweiten erfindungsgemäßen Vorrichtung. Die abgebildete Ausführungsform weist ebenfalls wie die in den Figuren 6a - 6c abgebildete Ausführungsform neben dem gemäß dem Stand der Technik bekannten elektronischen, mechanischen und eventuell hydraulischen Komponenten, hier unter dem Begriff Bremsvorrichtung (BV) 40 zusammengefasst, eine elektronische Steuereinheit (ECU) 42, eine Kraftübertragungsvorrichtung (KÜV) 44 sowie einen Positionssensor (POS) 46 und einen Kraftsensor (HS) 48 auf. In diesem Zusammenhang soll wie auch schon im beschreibenden Teil und in der vorgehend beschriebenen Ausführungsform der Begriff Kraftübertragungsvorrichtung sowohl einen Aktuator, alle Teile, die Kräfte auf die Bremsen übertragen als auch Bestandteile, an denen die Kraft des Aktuators wirkt, umfassen. Der Kraftsensor 48 kann wiederum an beliebiger geeigneter Stelle sowohl innerhalb dieser Kraftübertragungsvorrichtung 44 als auch außerhalb, eventuell auch in der Bremsvorrichtung 40 angebracht werden. Die elektronische Steuereinheit 42 ist über die Signalleitung 50 mit der Kraftübertragungsvorrichtung 44 verbunden, die in mechanischer Wirkverbindung mit der Bremsvorrichtung 40 steht. Der Positionssensor 46 erfasst ein von der Kraftübertragungsvorrichtung 44 geliefertes Positionssignal und gibt dieses als Positionsinformation 52 an die elektronische Steuereinheit 42 weiter. In analoger Weise erzeugt der Kraftsensor 48 ein der momentan an der Kraftübertragungsvorrichtung 44 oder der Bremsvorrichtung 40 anliegenden Kraft entsprechendes Messsignal 54 und gibt dieses ebenfalls an die elektronische Steuereinheit 42 aus. Sowohl der Weglängensensor 46 als auch der Kraftsensor 48 sind mit symbolischen Diagrammen 56 beziehungsweise 58 versehen. Diese stellen die während eines Anziehvorgangs erzeugten Messsignale im zeitlichen Verlauf da. Verläuft der Anziehvorgang ordnungsgemäß, endet, wie abgebildet, die Aufzeichnung des Kraftsignals mit dem Erreichen der Sollanziehkraft TFA. In gleicher Weise endet die Aufzeichnung des Positionssignals mit dem Erreichen des Kraftabschaltpunktes KAP. In der elektronischen Steuereinheit (ECU) 42 sind ebenfalls Diagramme 60 und 62 dargestellt. Das Diagramm 60 stellt die aus den Signalen 52 und 54 ermittelte Kraft-Positions-Zuordnung 61 dar. Das Diagramm 62 bildet eine aus früheren Anziehvorgängen ermittelte Kraft-Positions-Zuordnung 64 und spezifizierte typische Kraft-Positions-Zuordnungen 66 beziehungsweise 68 ab. Des Weiteren weist die elektronische Steuereinheit 42 eine Fehleranzeige 70 auf.

Die elektronische Steuervorrichtung 42 weist bei einem Anziehvorgang der Parkbremsen den Aktuator der Kraftübertragungsvorrichtung 44 an, sich in Anziehrichtung zu bewegen, das heißt, die Parkbremse soll zugespannt werden. Die Bewegung des Aktuators der Kraftübertragungsrichtung 44 wird durch den Positionssensor 46 im zeitlichen Verlauf ermittelt. Die so ermittelten Positionswerte im Verlauf der Zeit sind in Diagramm 56 dargestellt, diese Messwerte werden als Signal 52 an die elektronische Steuereinheit 42 übermittelt. Gleichzeitig misst der Kraftsensor 48 an der Kraftübertragungsvorrichtung 44 die am Aktuator anliegende Kraft im zeitlichen Verlauf. Das so erzeugte Kraftsignal im Verlaufe der Zeit ist im Diagramm 58 dargestellt und wird als Messinformation 54 ebenfalls an die elektronische Steuereinheit 42 übermittelt. Übersteigt bzw. erreicht die an der Kraftübertragungsvorrichtung 44 anliegende Kraft die Sollanziehkraft TFA, hält die elektronische Steuereinheit 42 den Anziehvorgang an. Damit hat der Aktuator den Kraftabschaltpunkt KAP erreicht. Die vom Kraftsensor 48 und vom Positionssensor 46 erzeugten Signale 54 und 52 werden in der elektronischen Steuereinheit 42 als Kraft-Positions-Wertepaare aufgezeichnet. Dies ist im Diagramm 60 dargestellt. Die so ermittelte Kraft-Positions-Kennlinie 61 kann sich über den gesamten Anziehvorgang oder nur über Teile desselben erstrecken. Während des gesamten Anziehvorgangs, insbesondere mit Erreichen der Sollanziehkraft TFA führt die elektronische Steuereinheit 42 einen Abgleich der gemessenen Kraft-Positions-Zuordnung 61 mit bei vorhergehenden Anziehvorgängen mittelten und/oder spezifizierten typischen Daten durch. Mit Hilfe des durch die Kennlinien 66 und 68 spezifizierten typischen Bereichs kann die elektronische Steuereinheit 42 eine erste Plausibilisierung der Kennlinie 61 vornehmen. Des Weiteren kann die elektronische Steuereinheit 42 die von einem oder mehreren vorhergehenden Anziehvorgängen ermittelte Kennlinie 64 mit der momentan ermittelten Kennlinie 61 vergleichen und so eine weitere Plausibilisierung vornehmen. Tritt bei einem dieser beiden Plausibilisierungsvorgänge eine hinsichtlich der Funktionalität oder der Sicherheit relevante Abweichung auf, gibt die elektronische Steuereinheit 42 eine Fehlermeldung 70 aus. Verlaufen hingegen die Plausibilitäts- und Sicherheitsprüfung positiv, ist der Anziehvorgang erfolgreich verlaufen und die Feststellbremse befindet sich in einem zugespannten Zustand.

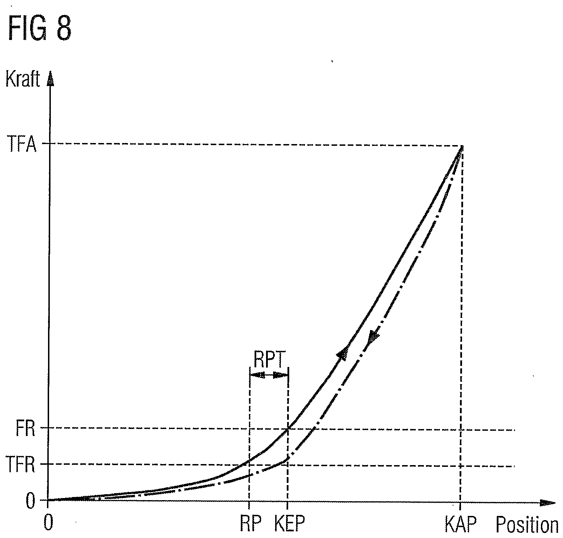

Die Figur 8 zeigt ein Kraft-Positions-Diagramm. Es veranschaulicht die beim erfindungsgemäßen Verfahren und bei einer erfindungsgemäßen Vorrichtung ablaufenden Bewegungen des Aktuators sowie ein Beispiel für die am Aktuator anliegende Kraft. Auf der Abszisse des Diagramms ist eine der momentanen Aktuatorstellung entsprechende Position aufgetragen, die Ordinate gibt die an der Kraftübertragungsvorrichtung anliegende Kraft wieder. An Positionswerten sind der Lösepunkt (RP), der Krafteinsatzpunkt (KEP) und der Kraftabschaltpunkt (KAP) sowie der Lösepositionsweg (RPT), an Kraftwerten sind die Solllösekraft (TFR), die Referenzkraft (FR) sowie die Sollanziehkraft (TFA) aufgetragen. Die mit einem Pfeil versehene durchgezogene Kurve stellt beispielhaft die Zuordnung der Aktuatorposition zu der an der Kraftübertragungsvorrichtung momentan anliegenden Kraft beim Anziehen der Parkbremse dar, die strichpunktierte, mit einem in die umgekehrte Richtung zeigenden Pfeil versehene Kurve stellt die Zuordnung der Aktuatorposition zu der an der Kraftübertragungsvorrichtung momentan anliegenden Kraft beim Lösen der Parkbremse dar.

Bei einer Bewegung des Aktuators, ausgehend von der Nullposition, in Richtung KEP, folgt die Kraft-Positions-Funktion der durchgezogenen Linie. Erreicht die an der Kraftübertragungsvorrichtung anliegende Kraft den Wert FR, wird die momentane Aktuatorposition als KEP festgelegt. Beim weiteren Anziehen der Parkbremse erreicht die an der Kraftübertragungsvorrichtung anliegende Kraft den Wert TFA, weiterhin der durchgezogenen Linie folgend. Diesem Kraftwert wird die Position KAP zugeordnet. Beim Lösen der Parkbremse folgt die der Position zugeordnete Kraft jetzt der strichpunktierten Linie. Dabei wird zunächst die beim Anziehen der Parkbremse ermittelte Position KEP angefahren. Von dort ausgehend wird der Aktuator um die relative Weglänge RPT weiter in Löserichtung verfahren. Durch die physikalischen Gegebenheiten der Bremsanlage verläuft die strichpunktierte Linie in der Regel unterhalb der durchgezogenen Linie, was durch die weiter oben erwähnten Hystereseeffekte bedingt ist. Aus diesem Grund ist die beim Erreichen der Position KEP an der Kraftübertragungsvorrichtung anliegende Kraft kleiner als FR und eventuell größer als TFR, würde aber bei einem direkt darauffolgenden Anziehen der Parkbremse nicht sofort den Wert FR erreichen. An der durch die relative Weglänge RPT bestimmten Position wird nun überprüft, ob die an der Kraftübertragungsvorrichtung anliegende Kraft kleiner als TFR ist. Dies ist in Figur 3 der Fall, womit der Lösepunkt RP erreicht ist und das erfindungsgemäße Verfahren an dieser Stelle endet. Sollte die an der Kraftübertragungsvorrichtung anliegende Kraft noch den Wert TFR übersteigen, würde der Aktuator weiter in Löserichtung bewegt, bis die an der Kraftübertragungsvorrichtung anliegende Kraft den Wert TFR unterschreitet.

Bei einem Anziehvorgang gemäß der alternativen Ausführungsform startet der Aktuator beispielsweise an der Löseposition RP in Anziehrichtung. Beim Anziehen werden in regelmäßigen Abständen Kraft-Positions-Zuordnungen vorgenommen und es erfolgt bereits beim Anziehen eine Plausibilisierung dieser Zuordnungen hinsichtlich funktionaler und sicherheitsrelevanter Aspekte. Beim Erreichen der Sollanziehkraft TFA endet der Anziehvorgang, der Aktuator befindet sich dann am Kraftabschaltpunkt KAP. Zur Plausibilisierung der ermittelten Kraft-Positions-Zuordnungen können sowohl die ermittelten Kraftwerte, der sich an der momentanen Position ergebende Kraftgradient und/oder die Geschwindigkeit des Aktuators herangezogen werden.

Es wird ein Verfahren zur Steuerung beziehungsweise Regelung einer elektronischen Feststellbremsanlage sowie eine elektronische Feststellbremsanlage offenbart, wobei beim Anfahren des zugespannten Zustands der Feststellbremsanlage Kraft-Positions-Zuordnungen vorgenommen werden. Es wird anhand dieser Kraft-Positions-Werte eine Plausibilisierung hinsichtlich der Funktion und/oder der Sicherheit der Feststellbremsanlage durchgeführt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Steuern einer elektronischen Parkbremse, bei dem
- bei einem Anziehen der Parkbremse eine Kraftsteuerung und eine Kraftmessung erfolgt und in Abhängigkeit der gemessenen Kraft mindestens eine erste Position eines Aktuators und somit mindestens eine Kraft-Positions-Zuordnung (61) ermittelt wird, und
- die erste Position mit einer vorgegebenen Position (64, 66, 68) zum Zwecke einer Plausibilisierung der Kraft-Positions-Zuordnung (61) verglichen wird,
**dadurch gekennzeichnet,**
**dass** auch die Geschwindigkeit des Aktuators und/oder der an der ersten Position vorhandene Kraftgradient ermittelt werden.

2. Verfahren nach Anspruch 1,
**dadurch gekennzeichnet,**
**dass** bei der ersten Position eine Kraft (TFA) vorliegt, die einem angezogenen Zustand der Parkbremse entspricht.

3. Verfahren nach Anspruch 1 oder 2 ,
**dadurch gekennzeichnet,**
**dass** bei dem Anziehen der Parkbremse durch Ermitteln mehrerer Kraft-Positions-Zuordnungen (61) mindestens ein Teil einer Kraft-Positions-Kennlinie (61) aufgenommen wird.

4. Verfahren nach einem der Ansprüche 1 bis 3,
**dadurch gekennzeichnet,**
**dass** die vorgegebene Position (66, 68) eine für einen angezogenen Zustand der Parkbremse typische Position (66, 68) ist.

5. Verfahren nach einem der Ansprüche 1 bis 4,
**dadurch gekennzeichnet,**
**dass** die vorgegebene Position (64) im Rahmen der Ermittlung der ersten Position bei einem früheren Anziehvorgang ermittelt wurde.

6. Verfahren nach einem der Ansprüche 1 bis 5,
**dadurch gekennzeichnet,**
**dass** die erste Position mit Positionen aus einem vorgegebenen Bereich (64, 66, 68) verglichen wird.

7. Elektronische Parkbremse, die im Rahmen einer Kraftsteuerung anziehbar ist, derart,
- dass bei einem Anziehen der Parkbremse eine Kraft bestimmbar ist und in Abhängigkeit der gemessenen Kraft mindestens eine erste Position eines Aktuators und somit mindestens eine Kraft-Positions-Zuordnung (61) bestimmbar ist, und
- dass die erste Position mit einer vorgegebenen Position (64, 66, 68) zum Zwecke einer Plausibilisierung der Kraft-Positions-Zuordnung (61) verglichen wird,
**dadurch gekennzeichnet,**
**dass** auch die Geschwindigkeit des Aktuators und/oder der an der ersten Position vorhandene Kraftgradient ermittelt werden.

8. Elektronische Parkbremse nach Anspruch 7,
**dadurch gekennzeichnet,**
**dass** bei der ersten Position eine Kraft (TFA) vorliegt, die einem angezogenen Zustand der Parkbremse entspricht.

9. Elektronische Parkbremse nach Anspruch 7 oder 8,
**dadurch gekennzeichnet,**
**dass** bei dem Anziehen der Parkbremse durch Ermitteln mehrerer Kraft-Positions-Zuordnungen (61) mindestens ein Teil einer Kraft-Positions-Kennlinie (61) aufnehmbar ist.

10. Elektronische Parkbremse nach einem der Ansprüche 7 bis 9,
**dadurch gekennzeichnet,**
**dass** die vorgegebene Position (66, 68) eine für einen angezogenen Zustand der Parkbremse typische Position (66, 68) ist.

11. Elektronische Parkbremse nach einem der Ansprüche 7 bis 10,
**dadurch gekennzeichnet,**
**dass** die vorgegebene Position (64) im Rahmen der Ermittlung der ersten Position bei einem früheren Anziehvorgang bestimmbar ist.

12. Elektronische Parkbremse nach einem der Ansprüche 7 bis 11,
**dadurch gekennzeichnet,**
**dass** die erste Position mit Positionen aus einem vorgegebenen Bereich (64, 66, 68) verglichen wird.

13. Betriebsbremse mit einer Vorrichtung nach einem der Ansprüche 7 bis 12.

14. Kraftfahrzeug mit einer elektronischen Parkbremse nach einem der Ansprüche 7 bis 12.

## Claims

1. Method for controlling an electronic parking brake, in which
- when the parking brake is applied a force control process and a force measuring process take place and at least a first position of an actuator and therefore at least one force-position assignment (61) are determined as a function of the measured force, and
- the first position is compared with a predefined position (64, 66, 68) for the purpose of checking the plausibility of the force-position assignment (61),
**characterized**
**in that** the speed of the actuator and/or the force gradient which is present at the first position are also determined.

2. Method according to Claim 1,
**characterized**
**in that** at the first position a force (TFA) is present which corresponds to an applied state of the parking brake.

3. Method according to Claim 1 or 2,
**characterized**
**in that** when the parking brake is applied, at least a part of the force-position characteristic curve (61) is recorded by determining a plurality of force-position assignments (61).

4. Method according to one of Claims 1 to 3,
**characterized**
**in that** the predefined position (66, 68) is a position (66, 68) which is typical of an applied state of the parking brake.

5. Method according to one of Claims 1 to 4,
**characterized**
**in that** the predefined position (64) has been determined within the scope of the determination of the first position during an earlier brake application process.

6. Method according to one of Claims 1 to 5,
**characterized**
**in that** the first position is compared with positions from a predefined range (64, 66, 68).

7. Electronic parking brake which can be applied within the scope of a force controller in such a way
- that when the parking brake is applied a force can be determined, and at least a first position of an actuator, and therefore at least one force-position assignment (61), can be determined as a function of the measured force, and
- that the first position is compared with a predefined position (64, 66, 68) for the purpose of checking the plausibility of the force-position assignment (61), **characterized**
**in that** the speed of the actuator and/or the force gradient which is present at the first position are determined.

8. Electronic parking brake according to Claim 7,
**characterized**
**in that** at the first position a force (TFA) is present which corresponds to an applied state of the parking brake.

9. Electronic parking brake according to Claim 7 or 8,
**characterized**
**in that** when the parking brake is applied, at least part of a force-position characteristic curve (61) can be recorded by determining a plurality of force-position assignments (61).

10. Electronic parking brake according to one of Claims 7 to 9,
**characterized**
**in that** the predefined position (66, 68) is a position (66, 68) which is typical of an applied state of the parking brake.

11. Electronic parking brake according to one of Claims 7 to 10,
**characterized**
**in that** the predefined position (64) can be determined within the scope of the determination of the first position during an earlier brake application process.

12. Electronic parking brake according to one of Claims 7 to 11,
**characterized**
**in that** the first position is compared with the positions from a predefined range (64, 66, 68).

13. Service brake having a device according to one of Claims 7 to 12.

14. Motor vehicle having an electronic parking brake according to one of Claims 7 to 12.

## Revendications

1. Procédé destiné à la commande d'un frein de stationnement électronique,
- pour lequel une commande de la force et une mesure de la force ont lieu quand le frein de stationnement est serré et au moins une première position d'un actionneur et, par conséquent, au moins une association de la position de la force (61) sont déterminées en fonction de la force mesurée ; et
- la première position est comparée à une position (64, 66, 68) prédéfinie à des fins de plausibilisation de l'association de la position de la force (61) ;
**caractérisé en ce que**
la vitesse de l'actionneur et/ou le gradient de la force qui existe au niveau de la première position sont également déterminés.

2. Procédé selon la revendication 1,
**caractérisé en ce que**
il existe une force (TFA) pour la première position, laquelle force correspond à un état serré du frein de stationnement.

3. Procédé selon la revendication 1 ou 2,
**caractérisé en ce que**
au moins une partie de la courbe caractéristique de la position de la force (61) est enregistrée pour le serrage du frein de stationnement par la détermination de plusieurs associations de la position de la force (61).

4. Procédé selon l'une des revendications 1 à 3,
**caractérisé en ce que**
la position (66, 68) prédéfinie est une position (66, 68) typique pour un état serré du frein de stationnement.

5. Procédé selon l'une des revendications 1 à 4,
**caractérisé en ce que**
la position (64) prédéfinie a été déterminée dans le cadre de la détermination de la première position durant un processus de serrage antérieur.

6. Procédé selon l'une des revendications 1 à 5,
**caractérisé en ce que**
la première position est comparée à des positions issues d'une zone (64, 66, 68) prédéfinie.

7. Frein de stationnement électronique, lequel peut être serré dans le cadre d'une commande de la force, de telle sorte
- qu'une force peut être déterminée durant un serrage du frein de stationnement et qu'au moins une première position d'un actionneur et, par conséquent, au moins une association de la position de la force (61) peuvent être déterminées en fonction de la force mesurée ; et
- que la première position est comparée à une position (64, 66, 68) prédéfinie à des fins de plausibilisation de l'association de la position de la force (61) ;
**caractérisé en ce que**
la vitesse de l'actionneur et/ou le gradient de la force qui existe au niveau de la première position sont également déterminés.

8. Frein de stationnement électronique selon la revendication 7,
**caractérisé en ce que**
il existe une force (TFA) pour la première position, laquelle force correspond à un état serré du frein de stationnement

9. Frein de stationnement électronique selon la revendication 7 ou 8,
**caractérisé en ce que**
au moins une partie de la courbe caractéristique de la position de la force (61) peut être enregistrée pour le serrage du frein de stationnement par la détermination de plusieurs associations de la position de la force (61).

10. Frein de stationnement électronique selon l'une des revendications 7 à 9,
**caractérisé en ce que**
la position (66, 68) prédéfinie est une position (66, 68) typique pour un état serré du frein de stationnement.

11. Frein de stationnement électronique selon l'une des revendications 7 à 10,
**caractérisé en ce que**
la position (64) prédéfinie peut être déterminée dans le cadre de la détermination de la première position durant un processus de serrage antérieur.

12. Frein de stationnement électronique selon l'une des revendications 7 à 11,
**caractérisé en ce que**
la première position est comparée à des positions issues d'une zone (64, 66, 68) prédéfinie.

13. Frein de service avec un dispositif selon l'une des revendications 7 à 12.

14. Véhicule à moteur avec un frein de stationnement électronique selon l'une des revendications 7 à 12.
